(19) Europäisches Patentamt
European Patent Office
Office européen des brevets

(11) **EP 2 570 780 B1**

(12) **EUROPÄISCHE PATENTSCHRIFT**

(45) Veröffentlichungstag und Bekanntmachung des Hinweises auf die Patenterteilung:
**03.01.2018   Patentblatt 2018/01**

(51) Int Cl.:
***G01D 5/38*** *(2006.01)*

(21) Anmeldenummer: **12182164.9**

(22) Anmeldetag: **29.08.2012**

(54) **Rotatorische Positionsmesseinrichtung**

Rotating positioning device

Dispositif de mesure de position rotatif

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.09.2011   DE 102011082570**

(43) Veröffentlichungstag der Anmeldung:
**20.03.2013   Patentblatt 2013/12**

(73) Patentinhaber: **Dr. Johannes Heidenhain GmbH 83301 Traunreut (DE)**

(72) Erfinder: **Benner, Ulrich 83308 Trostberg (DE)**

(56) Entgegenhaltungen:
**EP-A1- 1 852 684     EP-A2- 1 901 041
DE-A1- 3 904 898     JP-A- 2002 139 353**

EP 2 570 780 B1

**Beschreibung**

Die vorliegende Erfindung betrifft eine rotatorische Positionsmesseinrichtung.

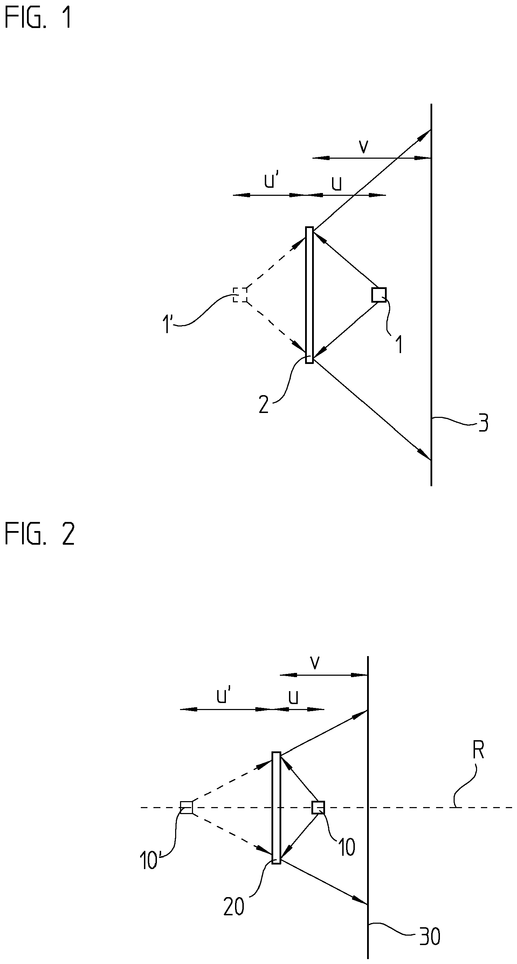

Figur 1 zeigt eine schematisierte Teil-Darstellung einer optischen Positionsmesseinrichtung, die auf einem Zentralprojektions-Abtastprinzip basiert. Eine Lichtquelle 1 beleuchtet hierbei divergent eine reflektive Maßverkörperung 2. Die Maßverkörperung kann sowohl als lineare wie auch als rotatorische Teilung ausgebildet sein, je nachdem ob die Positionsmesseinrichtung zur Erfassung von rotatorischen oder linearen Relativbewegungen dienen soll. Von der Maßverkörperung 2 werden die darauf einfallenden Strahlenbündel in Richtung der Lichtquelle 1 zurückreflektiert und treffen in einer Detektionsebene auf eine optoelektronische Detektoranordnung 3. Die Maßverkörperung 2 ist gegenüber der Lichtquelle 1 und der Detektoranordnung 3 relativ bewegbar angeordnet, d.h. entweder entlang einer linearen Achse verschiebbar oder aber um eine Rotationsachse verdrehbar. Im Fall der Relativbewegung der Maßverkörperung 2 gegenüber Lichtquelle 1 und Detektoranordnung 3 resultiert in der Detektionsebene ein moduliertes Streifenmuster, welches über die Detektoranordnung 3 in bewegungsabhängige Positionssignale umsetzbar sind.

Mit Hilfe einer derartigen Positionsmesseinrichtung kann die Relativ- oder Absolutposition zweier zueinander (linear oder rotatorisch) beweglicher Objekte bestimmt werden. Eines der Objekte ist hierbei mit der Maßverkörperung 2 verbunden, das andere Objekt mit der Lichtquelle 1 und der Detektoranordnung 3.

Wie aus Figur 1 ersichtlich, ist die Lichtquelle 1 in einem Abstand u beabstandet von der Maßverkörperung 2 angeordnet; nachfolgend sei dieser Abstand als erster Abstand bezeichnet. Die Detektoranordnung 3 ist in einem Abstand v von der Maßverkörperung 2 angeordnet, welcher nachfolgend als zweiter Abstand bezeichnet sei. Gemäß Figur 1 ist der zweite Abstand v verschieden vom ersten Abstand u.

Modellmäßig kann der erläuterte Abtaststrahengang auch dergestalt betrachtet werden, dass anstelle der realen Lichtquelle 1 im Abstand u von der Maßverkörperung 2 eine virtuelle Lichtquelle 1' im Abstand u'=u die Maßverkörperung 2 von der anderen Seite beleuchtet. Die von der Lichtquelle 1' emittierten Strahlenbündel bewirken eine Zentralprojektion der abgetasteten Teilung der Maßverkörperung 2 in die Detektionsebene.

Bekannt sind rotatorische Positionsmesseinrichtungen, basierend auf einem optischen Zentralprojektions-Abtastprinzip, etwa aus der JP 9-133552 A oder aus der JP 2002-139353 A. Diese Positionsmesseinrichtungen umfassen eine Lichtquelle, eine Teilscheibe mit einer rotationssymmetrischen, reflektiven Maßverkörperung sowie eine optoelektronische Detektoranordnung. Die Teilscheibe ist jeweils gegenüber der Lichtquelle und der Detektoranordnung um eine Rotationsachse drehbar, so dass im Fall der Relativdrehung drehwinkelabhängige Positionssignale über die Detektoranordnung erfassbar sind.

Das genutzte Zentralprojektions-Abtastprinzip zur Erzeugung der Positionssignale ist auch als sog. Dreigitter-Abtastprinzip bekannt; hierzu sei etwa auf die Veröffentlichung von R. Pettigrew mit dem Titel "Analysis of Grating Imaging and its Application to Displacement Metrology" in SPIE Vol. 36, 1st European Congress on Optics applied to Metrology (1977), S. 325 - 332 hingewiesen.

Im Idealfall werden bei einer derartigen Zentralprojektionsabtastung der erste Abstand u und der zweite Abstand v identisch gewählt; hierzu sind die entsprechenden Komponenten der Positionsmesseinrichtung geeignet im Abtaststrahlengang zu platzieren. Bei identisch gewählten Abständen u, v wirken sich eventuelle Veränderungen des Abstandes zwischen den Objekten bzw. zwischen Maßverkörperung 2 und Lichtquelle1/Detektoranordnung 2, d.h. des Abtastabstandes, nicht auf die Größe des in der Detektionsebene resultierenden Streifenmusters aus. In der Praxis ist jedoch nicht immer sichergestellt, dass der erste und zweite Abstand u, v identisch sind. Das heißt, es resultiert oftmals eine Situation wie in Figur 1 dargestellt, wonach der erste Abstand u verschieden vom zweiten Abstand v ist, im konkreten Beispiel gilt u < v. In diesem Fall verursachen Schwankungen des Abtastabstandes Veränderungen in der Größe des Streifenmusters und damit Fehler bei der Positionsbestimmung.

Weitere Probleme bei derartigen Positionsmesseinrichtungen resultieren aufgrund deren Empfindlichkeit gegenüber Verschmutzungen auf der Maßverkörperung.

Aufgabe der vorliegenden Erfindung ist es, rotatorische Positionsmesseinrichtungen, basierend auf dem Zentralprojektions-Abtastprinzip, hinsichtlich nicht-idealer Abstände zwischen einzelnen Komponenten im Abtaststrahlengang unempfindlicher zu machen und/oder eine größere Unempfindlichkeit gegenüber Verschmutzungen der abgetasteten Maßverkörperung sicherzustellen.

Diese Aufgabe wird erfindungsgemäß durch eine rotatorische Positionsmesseinrichtung mit den Merkmalen des Anspruchs 1 gelöst.

Vorteilhafte Ausführungen der erfindungsgemäßen rotatorischen Positionsmesseinrichtung ergeben sich aus den Maßnahmen in den abhängigen Ansprüchen.
Die erfindungsgemäße rotatorische Positionsmesseinrichtung umfasst eine Lichtquelle, eine Teilscheibe mit einer rotationssymmetrischen, reflektiven Maßverkörperung und eine optoelektronische Detektoranordnung. Die Teilscheibe ist gegenüber der Lichtquelle und der Detektoranordnung um eine Rotationsachse drehbar, so dass im Fall der Relativdrehung drehwinkelabhängige Positionssignale über die Detektoranordnung erfassbar sind. Hierbei ist die Lichtquelle auf der Rotationsachse in einem ersten Abstand beabstandet von der Maßverkörperung angeordnet; die Detektoranordnung ist in einem zweiten Abstand von der Maßverkörperung angeordnet, der verschieden vom ersten Abstand ist. Die Teilscheibe umfasst optische Mittel, welche eine optische Wirkung dergestalt besitzen, dass eine Abbildung der Lichtquelle in eine Position resultiert, die einen dritten Abstand von der Maßverkörperung aufweist, wobei der dritte Abstand betragsmäßig verschieden zum ersten Abstand ist, und wobei die optischen Mittel auf der Teilscheibe eine optische Wirkung aufweisen, die der optischen Wirkung eines Konkavspiegels oder eines Konvexspiegels mit einer definierten Brennweite entspricht. Es ist hierbei möglich, dass der dritte Abstand identisch zum zweiten Abstand gewählt ist.

Dabei kann über die optischen Mittel auf der Teilscheibe eine reelle Abbildung der Lichtquelle in eine Position resultieren, so dass die von dieser Position emittierten Strahlenbündel zunächst die Detektoranordnung passieren, auf die Maßverkörperung auftreffen und nach der dort resultierenden Reflexion konvergierend in Richtung der Detektoranordnung propagieren.

Desweiteren ist es möglich, dass die Maßverkörperung als Radialteilung ausgebildet ist, die aus kreisringförmig angeordneten Teilungsbereichen mit unterschiedlichen Reflexionseigenschaften besteht.

Ferner können höher reflektierende Teilungsbereiche auf der Teilscheibe dergestalt ausgebildet sind, dass darüber die optische Wirkung auf die darauf einfallenden Strahlenbündel resultiert.

Es ist ferner möglich, dass die optischen Mittel als rotationssymmetrische Stufenstrukturen auf dem Trägersubstrat der Teilscheibe ausgebildet sind.

In einer bevorzugten Ausführungsform der erfindungsgemäßen rotatorischen Positionsmesseinrichtung beleuchtet die Lichtquelle die Maßverkörperung ohne zwischengeschaltete Optikkomponenten vollständig.

Desweiteren kann die Detektoranordnung ein kreisringförmiges Detektorarray umfassen, das aus einer Mehrzahl von kreisringförmig um die Rotationsachse angeordneten Detektorelementen besteht.

Als besonderer Vorteil der erfindungsgemäßen Maßnahmen ergibt sich in bestimmten Ausführungsvarianten eine größere Unempfindlichkeit gegenüber Änderungen der Abstände von Komponenten im Abtaststrahlengang. Auch bei Abweichungen von den idealen Sollabständen, wie dies z.B. durch eine fehlerhafte Montage der Positionsmesseinrichtung verursacht werden kann, resultiert eine hinreichende Signalqualität in den Positionssignalen.

Als weiterer Vorteil ist anzuführen, dass in möglichen Ausführungsvarianten aufgrund des konvergenten Strahlengangs zwischen Maßverkörperung und Detektoranordnung nunmehr deutlich kleinere Detektorflächen in der Detektoranordnung ausreichen, um drehwinkelabhängige Positionssignale zu erzeugen. Die Kosten für die Detektoranordnung lassen sich derart verringern. Als Folge dieses Strahlengangverlaufs ergibt sich zudem eine größere Unempfindlichkeit gegenüber möglichen Verschmutzungen der Maßverkörperung, da im Gegensatz zum ansonsten üblichen divergenten Strahlengang nunmehr der auf der Maßverkörperung abgetastete Bereich größer als der auf die Detektoranordnung abgebildete Bereich ist.

Weitere Vorteile sowie Einzelheiten der vorliegenden Erfindung ergeben sich aus der nachfolgenden Beschreibung von Ausführungsbeispielen anhand der beiliegenden Figuren.

Es zeigt hierbei

Figur 2 eine schematische Teil-Darstellung eines ersten Ausführungsbeispiels der erfindungsgemäßen rotatorischen Positionsmesseinrichtung;

Figur 3a eine seitliche Teilansicht des ersten Ausführungsbeispiels der erfindungsgemäßen rotatorischen Positionsmesseinrichtung;

Figur 3b eine Draufsicht auf die Detektoranordnung des ersten Ausführungsbeispiels der erfindungsgemäßen rotatorischen Positionsmesseinrichtung;

Figur 4a eine Draufsicht auf die Teilscheibe aus dem ersten Ausführungsbeispiel der erfindungsgemäßen rotatorischen Positionsmesseinrichtung;

Figur 4b eine Schnittansicht eines Teils der Teilscheibe aus Figur 4a;

Figur 5 eine schematische Teil-Darstellung eines zweiten Ausführungsbeispiels der erfindungsgemäßen rotatorischen Positionsmesseinrichtung.

In einer zur Figur 1 analogen, schematischen Teildarstellung ist in Figur 2 ein erstes Ausführungsbeispiel einer erfindungsgemäßen rotatorischen Positionsmesseinrichtung gezeigt, die auf einem Zentralprojektions-Abtastprinzip basiert.

Im dargestellten Ausführungsbeispiel der rotarischen Positionsmesseinrichtung ist eine Lichtquelle 10 vorgesehen, die eine Teilscheibe mit einer rotationssymmetrischen, reflektiven Maßverkörperung 20 divergent beleuchtet.

Zwischen der Lichtquelle 10 und der Maßverkörperung 20 sind keine weiteren zwischengeschalteten Optikkomponenten vorgesehen, was eine besonders kompakte Ausgestaltung der erfindungsgemäßen rotatorischen Positionsmesseinrichtung ermöglicht. Die Maßverkörperung 20 auf der Teilscheibe ist als Radialteilung ausgebildet, die aus kreisringförmig um die Rotationsachse R angeordneten Teilungsbereichen mit unterschiedlichen Reflexionseigenschaften besteht. Als Maßverkörperung kann hierbei sowohl eine Inkrementalteilung mit periodisch angeordneten Teilungsbereichen unterschiedlicher Reflektivität oder aber auch eine Absolutteilung mit aperiodisch angeordneten Teilungsbereichen unterschiedlicher Periodizität vorgesehen werden. Von der rotationssymmetrischen, vollständig beleuchteten Maßverkörperung 20 werden die auftreffenden Strahlenbündel in Richtung der Lichtquelle 10 zurückreflektiert und treffen in der Detektionsebene auf die rotationssymmetrische optoelektronische Detektoranordnung 30. Die Teilscheibe mit der Maßverkörperung 20 ist gegenüber der Lichtquelle 10 und der Detektoranordnung 30 um die Rotationsachse R drehbar. Im Fall der Relativdrehung der Teilscheibe mit der Maßverkörperung 20 gegenüber Lichtquelle 10 und Detektoranordnung 30 resultiert in der Detektionsebene ein kreisringförmiges, moduliertes Streifenmuster, welches über die Detektoranordnung 30 in drehwinkelabhängige Positionssignale umsetzbar ist.

Mit Hilfe einer derartigen rotatorischen Positionsmesseinrichtung kann demzufolge die Relativ- oder Absolutposition zweier zueinander um die Rotationsachse R drehbarer Objekte bestimmt werden. Eines der Objekte ist hierbei mit der Teilscheibe bzw. Maßverkörperung 20 verbunden, das andere Objekt mit der Lichtquelle 10 und der Detektoranordnung 30. Bei den beiden Objekten kann es sich etwa um relativ zueinander drehbare Maschinenteile handeln. Die über die Positionsmesseinrichtung erzeugten Positionssignale können einer Maschinensteuerung zugeführt werden, die diese z.B. zur Positionierung der entsprechenden Maschinenteile nutzt.

Wie aus Figur 2 ersichtlich, ist die Lichtquelle 10 auf der Rotationsachse R im ersten Abstand u beabstandet von der Maßverkörperung 1 angeordnet. Die Detektoranordnung 30 ist im zweiten Abstand v von der Maßverkörperung 20 beabstandet angeordnet. Der zweite Abstand v ist verschieden vom ersten Abstand u gewählt.

Erfindungsgemäß ist nunmehr vorgesehen, dass in der Teilscheibe optische Mittel vorgesehen bzw. integriert werden, die eine Abbildung der Lichtquelle 10 in eine Position auf der Rotationsachse R bewirken, die einen dritten Abstand u' von der Maßverkörperung 20 aufweist, wobei dieser dritte Abstand u' betragsmäßig verschieden vom ersten Abstand u ist. In Figur 2 ist die in diese Position abgebildete Lichtquelle, d.h. das Lichtquellenbild, mit dem Bezugszeichen 10' bezeichnet, der aus dieser Position resultierende Strahlengang in strichlinierter Form angedeutet. Im dargestellten Ausführungsbeispiel wurden die entsprechenden optischen Mittel in der Teilscheibe dergestalt dimensioniert, dass der dritte Abstand u' identisch zum zweiten Abstand v ist. Wie nachfolgend noch erläutert wird, ist die Wahl des dritten Abstands u' als identisch zum zweiten Abstand v jedoch keineswegs erfindungswesentlich, d.h. es lassen sich vorteilhafte Ausführungsformen der erfindungsgemäßen rotatorischen Positionsmesseinrichtung auch mit anderweitig gewählten dritten Abständen u' realisieren.

Die in die Teilscheibe integrierten optischen Mittel besitzen hierbei entweder die optische Wirkung eines Konkavspiegels oder eines Konvexspiegels mit jeweils definierter Brennweite f. Im Beispiel der Figur 2 resultiert über die entsprechenden optischen Mittel auf der Teilscheibe die optische Wirkung eines Konkavspiegels, wobei der Betrag der Brennweite des Konkavspiegels größer als der Betrag der Objektweite bei der Abbildung durch den Konkavspiegel gewählt ist. Dadurch erfolgt eine Abbildung der Lichtquelle 10 in die virtuelle Lichtquelle 10' an einer Position auf der Rotationsachse R, die den dritten Abstand u' von der Maßverkörperung 20 aufweist.

Nachfolgend sei erläutert, wie für das vorliegende Beispiel die erforderliche Brennweite f des Konkavspiegels bzw. der entsprechenden Mittel in der Teilscheibe ermittelt wird, die man benötigt, um im dritten Abstand u' das virtuelle Lichtquellenbild 10' zu erzeugen.

So bestimmt sich der Abbildungsmaßstab $m_{1,2}$ bei gegebenen ersten und zweiten Abständen u, v in der gezeigten Anordnung gemäß folgender Beziehung:

$$m_{1,2} = u/(2v) +/- \operatorname{Sqrt}\left(\left(u/(2v)\right)^2 - 1\right) \qquad (\text{Gl. 1})$$

Der erforderliche dritte Abstand u' resultiert dann aus Gleichung 2 folgendermaßen:

$$u' = m_{1/2} \cdot u \qquad (\text{Gl. 2})$$

Die erforderliche Brennweite f für den Konkavspiegel lässt sich sodann aus Gleichung 3 ermitteln:

$$1/u + 1/u' = 1/f \qquad (\text{Gl. 3})$$

Über die entsprechenden optischen Mittel in der Teilscheibe ist demzufolge die optische Wirkung eines Konkavspiegels mit der derart bestimmten Brennweite f sicherzustellen, damit eine virtuelle Abbildung der Lichtquelle 10 wie dargestellt in die gewünschte Position erfolgt.

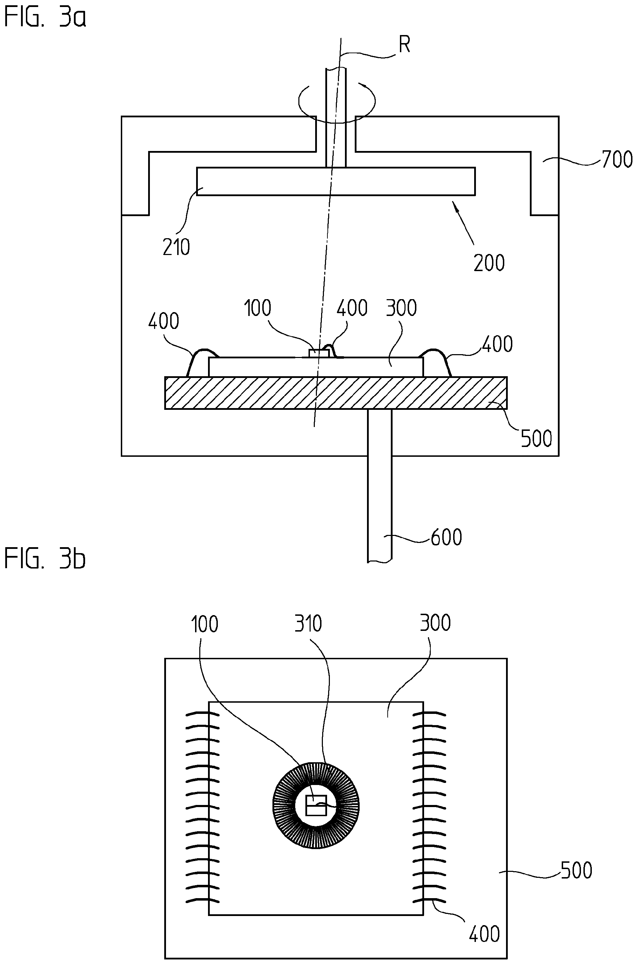

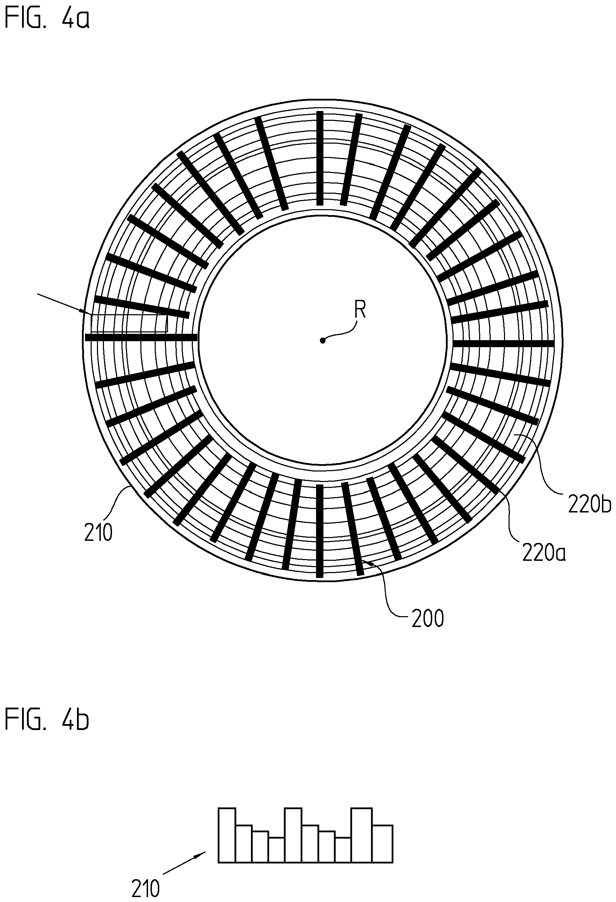

Eine konkrete Ausgestaltung des ersten Ausführungsbeispiels aus der Figur 2 der erfindungsgemäßen rotatorischen Positionsmesseinrichtung sei nachfolgend anhand der Figuren 3a, 3b sowie 4a und 4b erläutert. Die Figuren 3a, 3b zeigen hierbei verschiedene Teilansichten der gesamten Positionsmesseinrichtung, die Figuren 4a und 4b verschiedene Ansichten der darin genutzten Teilscheibe inclusive Maßverkörperung.

In einem Gehäuse 700 der Positionsmesseinrichtung ist auf einer stationären Trägerplatine 500 eine Detektoranordnung 300 angeordnet; oberhalb der Detektoranordnung 300 ist zentral eine Lichtquelle 100 platziert. Die Detektoranordnung 300 und die Lichtquelle 100 sind über Bonddrähte 400 mit - nicht in den Figuren dargestellten - Signalleitungen in der Trägerplatine 500 verbunden. Über ein Kabel 600 ist die Trägerplatine 500 mit einer ebenfalls nicht gezeigten Folgeelektronik verbunden, über das sowohl die erzeugten Positionssignale übertragen werden und über das auch die Strom- und Spannungsversorgung der elektronischen Komponenten in der Positionsmesseinrichtung erfolgt.

Wie insbesondere aus Figur 3b ersichtlich, umfasst die Detektoranordnung 300 ein kreisringförmiges Detektorarray 310, bestehend aus einer Vielzahl kreisringförmig und periodisch um die Rotationsachse R angeordneter einzelner Detektorelemente.

Um die Rotationsachse R drehbar ist im Gehäuse 700 die Teilscheibe 210 angeordnet. Die Teilscheibe 210 trägt auf der der Detektoranordnung 300 zugewandten Seite eine reflektive Maßverkörperung 200. In die Teilscheibe 210 integriert sind optische Mittel vorgesehen, die die oben erläuterte optische Wirkung besitzen, nämlich die Lichtquelle 100 in eine Position abbilden, die einen dritten Abstand u' von der Maßverkörperung 200 aufweist. Im vorliegenden konkreten Ausführungsbeispiel wurden die optischen Mittel in der Teilscheibe 210 so ausgebildet, dass diese eine optische Wirkung wie ein Konkavspiegel gemäß dem Beispiel der Figur 2 besitzen, d.h. der resultierende dritte Abstand u' ist identisch zum zweiten Abstand v.

Eine Draufsicht auf die Teilscheibe 210 dieses Ausführungsbeispiels ist in Figur 4a dargestellt, eine Teil-Querschnittsansicht der Teilscheibe 210 in Figur 4b. Wie aus Figur 4a ersichtlich, ist auf der Teilscheibe 210 auf einem Trägersubstrat, welches etwa aus Glas, Metall oder Kunststoff bestehen kann, eine reflektive Maßverkörperung 200 in Form einer inkrementalen Radialteilung angeordnet, die aus kreisringförmig um die Rotationsachse R angeordneten Teilungsbereichen 220a, 220b mit unterschiedlichen Reflexionseigenschaften besteht. Die dunkel dargestellten Teilungsbereiche 220a der Maßverkörperung 200 besitzen im dargestellten Beispiel eine geringere Reflektivität als die dazwischen liegenden Teilungsbereiche 220b; alternativ hierzu wäre es auch möglich, diese Teilungsbereiche 220a so auszubilden, dass das davon reflektierte Licht nicht auf die Detektoranordnung gelangt. Die in Figur 4a erkennbaren konzentrischen Kreise auf der Teilscheibe 210 stellen die Grenzen von rotationssymmetrischen Strukturen bzw. radialen Stufenstrukturen in den höher reflektierenden Teilungsbereichen 220b dar, die im markierten Ausschnitt in Figur 4b im Querschnitt gezeigt sind. Über die radialen Stufenstrukturen in der Teilscheibe 210 werden im vorliegenden Ausführungsbeispiel die optischen Mittel ausgebildet, die die definierte Abbildung der Lichtquelle 100 bewirken. Durch die konkrete Ausbildung der Stufenstrukturen, d.h. die gezielte Wahl der Stufenhöhe, der Stufenbreite sowie der Konzentrizität der rotationssymmetrischen Stufenstrukturen wird die Teilscheibe 210 somit zu einem diffraktiven Konkavspiegel mit definierter Brennweite, über den die Abbildung der Lichtquelle 100 wie erläutert erfolgt. Die Wahl der relevanten Parameter der Stufenstrukturen basiert hierbei auf den bekannten Prinzipien zum Entwurf diffraktiver Elemente für eine Punktzu-Punkt-Abbildung.

Die Herstellung einer Teilscheibe 210 mit einer derart ausgebildeten Maßverkörperung 200 kann etwa erfolgen, indem zunächst die rotationssymmetrische Stufenstruktur durch Abscheidung geeigneter Schichten und lithographischer Strukturierung derselbigen auf einem reflektierenden Trägersubstrat erzeugt wird. Anschließend werden darauf die gering-reflektierenden Teilungsbereiche der Radialteilung aufgebracht, beispielsweise durch Abscheiden geeigneter absorbierender Materialien.

Alternativ hierzu wäre es auch möglich, die Teilscheibe 210 über Techniken auszubilden, wie sie etwa aus der CD-Herstellung bekannt sind. Hierbei würde in den gering-reflektierenden Teilungsbereichen eine diffraktive Feinstruktur aufgebracht, über die sichergestellt ist, dass das darauf einfallende Licht nicht auf die Detektoranordnung gelangt, sondern in andere Raumrichtungen gebeugt wird. Diese Feinstrukturen als auch die rotationssymmetrischen Stufenstrukturen könnten etwa zunächst in transparentem Kunststoff abgeformt und dann mit einer gut reflektierenden Metallschicht, z.B. aus Aluminium oder Gold, versehen werden.

Anstelle die optischen Mittel in der Teilscheibe als Konkavspiegel auszubilden könnte in dieser Ausführungsform der erfindungsgemäßen rotatorischen Positionsmesseinrichtung auch vorgesehen werden, über entsprechende Stufenstrukturen in der Teilscheibe eine optische Wirkung zu erzielen, die einem Konvexspiegel entspricht, wobei der Betrag der Brennweite des Konvexspiegels größer als der Betrag der Objektweite bei der Abbildung durch den Konvexspiegel gewählt ist.

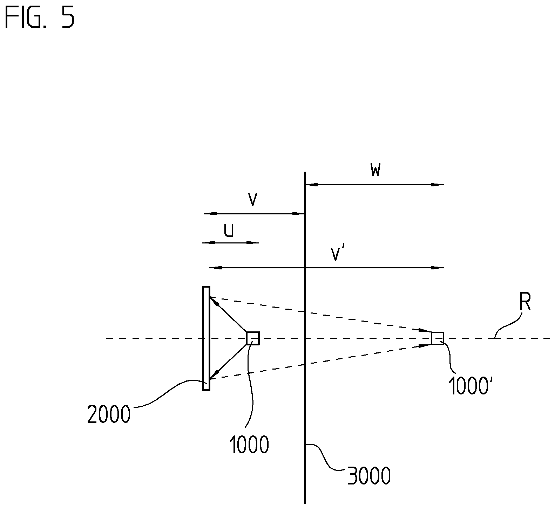

Ein weiteres Ausführungsbeispiel der erfindungsgemäßen rotatorischen Positionsmesseinrichtung sei abschließend anhand von Figur 5 erläutert. Diese Figur zeigt analog zur Darstellung in Figur 2 in stark schematisierter Form den Abtaststrahlengang dieses Ausführungsbeispiels.

Vorgesehen ist wiederum eine Lichtquelle 1000, die im ersten Abstand u benachbart zur Maßverkörperung 2000 auf der Rotationsachse R angeordnet ist. Analog zum ersten Ausführungsbeispiel ist die Detektoranordnung 3000 im zweiten Abstand v beabstandet von der Maßverkörperung 2000 angeordnet. Die Maßverkörperung 2000 ist ebenso wie oben als reflektive Maßverkörperung in Form einer Radialteilung ausgebildet.

Unterschiedlich zum vorherigen Ausführungsbeispiel sind nunmehr die optischen Mittel in der Teilscheibe ausgebildet, die die Abbildung der Lichtquelle 1000 in eine bestimmte Position bewirken, welche den dritten Abstand u' von der Maßverkörperung 2000 aufweist. Während im ersten Ausführungsbeispiel über die als Konkavspiegel wirkenden optischen Mittel eine virtuelle Abbildung der Lichtquelle erfolgte, resultiert nunmehr über die vorgesehenen optischen Mittel in der Teilscheibe eine reelle Abbildung der Lichtquelle 1000 in das Lichtquellenbild 1000', wobei der Abstand des Lichtquellenbilds 1000' von der Detektoranordnung 3000 einem vierten Abstand w entspricht, der identisch mit dem zweiten Abstand v zwischen Maßverkörperung 2000 und Detektoranordnung 3000 ist. Der resultierende dritte Abstand u' ist hier nicht wie im vorherigen Ausführungsbeispiel identisch mit dem zweiten Abstand v. Die optischen Mittel wirken auch in diesem Ausführungsbeispiel wiederum als Konkavspiegel, jedoch ist im Unterschied zum vorherigen Beispiel der Betrag der Brennweite des Konkavspiegels kleiner als der Betrag der Objektweite bei der Abbildung durch den Konkavspiegel.

Aufgrund der sich ergebenden Lage des Lichtquellenbilds 1000' passieren nunmehr die vom Lichtquellenbild 1000' emittierten Strahlenbündel wie aus Figur 5 ersichtlich zunächst die Detektoranordnung 3000, treffen dann auf die Maßverkörperung 2000 und propagieren schließlich nach der Reflexion von der Maßverkörperung 2000 konvergierend in Richtung der Detektoranordnung 3000.

In diesem Ausführungsbeispiel ist demzufolge nicht die Gleichheit des zweiten und dritten Abstands u, v gewährleistet. Dies hat aufgrund des genutzten Zentralprojektions-Abtastprinzips zur Folge, dass sich bei eventuellen Änderungen des Abtastabstands zwischen Maßverkörperung 2000 und Detektoranordnung 3000 Änderungen in der Größe des in der Detektionsebene resultierenden Streifenmusterbildes ergeben. Dieser Aspekt ist bei der vorliegenden rotationssymmetrischen Abbildung der Maßverkörperung in die Detektionsebene nicht so kritisch, da auch im Fall eines veränderten Durchmessers des Streifenmusterbildes die Lage der Hell-Dunkel-Übergänge im Streifenmusterbild unverändert bleibt. Als Vorteil dieses Ausführungsbeispiels erweist sich demzufolge nicht primär die Unabhängigkeit von Schwankungen des Abtastabstands, sondern die Tatsache, dass zwischen Maßverkörperung 2000 und Detektoranordnung 3000 ein konvergierender Strahlengang vorliegt. Dies hat zur Folge, dass die Strukturen der Maßverkörperung 2000 verkleinert in die Detektionsebene abgebildet werden und demzufolge auch kleinere Detektorflächen in der Detektoranordnung 3000 gegenüber bekannten derartigen Systemen ausreichen. Ebenso ergibt sich daraus eine verbesserte Unempfindlichkeit gegenüber eventuellen Verschmutzungen auf der abgetasteten Maßverkörperung 2000.

**Patentansprüche**

1. Rotatorische Positionsmesseinrichtung mit

   - einer Lichtquelle (10; 100; 1000),
   - einer Teilscheibe (210) mit einer rotationssymmetrischen, reflektiven Maßverkörperung (20; 200; 2000) und
   - einer optoelektronischen Detektoranordnung (30; 300; 3000), wobei
   - die Teilscheibe (210) gegenüber der Lichtquelle (10; 100; 1000) und der Detektoranordnung um eine Rotationsachse (R) drehbar ist, so dass im Fall der Relativdrehung drehwinkelabhängige Positionssignale über die Detektoranordnung (30; 300; 3000) erfassbar sind und wobei
   - die Lichtquelle (10; 100; 1000) auf der Rotationsachse (R) in einem ersten Abstand (u) beabstandet von der Maßverkörperung (20; 200; 2000) angeordnet ist und
   - die Detektoranordnung (30; 300; 3000) in einem zweiten Abstand (v) von der Maßverkörperung (20; 200; 2000) angeordnet ist, der verschieden vom ersten Abstand (u) ist und wobei
   - die Teilscheibe optische Mittel umfasst, welche eine optische Wirkung dergestalt besitzen, dass eine Abbildung der Lichtquelle (10; 100; 1000) in eine Position resultiert, die einen dritten Abstand (u') von der Maßverkörperung (20; 200; 2000) aufweist, wobei der dritte Abstand (u') betragsmäßig verschieden zum ersten Abstand (u) ist und wobei die optischen Mittel auf der Teilscheibe (210) eine optische Wirkung aufweisen, die der optischen Wirkung eines Konkavspiegels oder eines Konvexspiegels mit einer definierten Brennweite (f) entspricht.

2. Rotatorische Positionsmesseinrichtung nach Anspruch 1, wobei der dritte Abstand identisch (u') zum zweiten Abstand (v) ist.

3. Rotatorische Positionsmesseinrichtung nach Anspruch 1, wobei über die optischen Mittel auf der Teilscheibe (210) eine reelle Abbildung der Lichtquelle (10; 100; 1000) in eine Position resultiert, so dass die von dieser Position emittierten Strahlenbündel zunächst die Detektoranordnung (30; 300; 3000) passieren, auf die Maßverkörperung (20; 200; 2000) auftreffen und nach der dort resultierenden Reflexion konvergierend in Richtung der Detektoranordnung (30; 300; 3000) propagieren.

4. Rotatorische Positionsmesseinrichtung nach Anspruch 1, wobei die Maßverkörperung (20; 200; 2000) als Radialteilung ausgebildet ist, die aus kreisringförmig angeordneten Teilungsbereichen (220a, 220b) mit unterschiedlichen Reflexionseigenschaften besteht

5. Rotatorische Positionsmesseinrichtung nach Anspruch 1, wobei höher reflektierende Teilungsbereiche (220b) auf der Teilscheibe (210) dergestalt ausgebildet sind, dass darüber die optische Wirkung auf die darauf einfallenden Strahlenbündel resultiert.

6. Rotatorische Positionsmesseinrichtung nach Anspruch 1, wobei die optischen Mittel als rotationssymmetrische Stufenstrukturen auf dem Trägersubstrat der Teilscheibe (210) ausgebildet sind.

7. Rotatorische Positionsmesseinrichtung nach Anspruch 1, wobei die Lichtquelle (10; 100; 1000) die Maßverkorperung (20; 200; 2000) ohne zwischengeschaltete Optikkomponenten vollständig beleuchtet.

8. Rotatorische Positionsmesseinrichtung nach Anspruch 1, wobei die Detektoranordnung (30; 300; 3000) ein kreisringförmiges Detektorarray (310) umfasst, das aus einer Mehrzahl von kreisringförmig um die Rotationsachse (R) angeordneten Detektorelementen besteht.

## Claims

1. Rotatory position measuring device, having

   - a light source (10; 100; 1000),
   - a graduated disc (210) with a rotationally symmetric, reflective material measure (20; 200; 2000) and
   - an optoelectronic detector arrangement (30; 300; 3000), wherein
   - the graduated disc (210) is rotatable about an axis of rotation (R) in relation to the light source (10; 100; 1000) and the detector arrangement such that, in the case of the relative rotation, rotational-angle-dependent position signals are capturable by way of the detector arrangement (30; 300; 3000) and wherein
   - the light source (10; 100; 1000) is arranged on the axis of rotation (R) in a manner spaced apart from the material measure (20; 200; 2000) at a first distance (u) and
   - the detector arrangement (30; 300; 3000) is arranged at a second distance (v) from the material measure (20; 200; 2000), said second distance differing from the first distance (u), and wherein
   - the graduated disc comprises optical means which have such an optical power that imaging of the light source (10; 100; 1000) results at a position which has a third distance (u') from the material measure (20; 200; 2000), wherein, in terms of magnitude, the third distance (u') differs from the first distance (u) and wherein the optical means on the graduated disc (210) have an optical power which corresponds to the optical power of a concave mirror or of a convex mirror with a defined focal length (f).

2. Rotatory position measuring device according to Claim 1, wherein the third distance is identical (u') to the second distance (v).

3. Rotatory position measuring device according to Claim 1, wherein, by way of the optical means on the graduated disc (210), a real image of the light source (10; 100; 1000) results at a position such that the beams emitted from this position initially pass through the detector arrangement (30; 300; 3000), impinge on the material measure (20; 200; 2000) and, after the reflection resulting there, propagate in converging fashion in the direction of the detector arrangement (30; 300; 3000).

4. Rotatory position measuring device according to Claim 1, wherein the material measure (20; 200; 2000) is embodied as a radial graduation which consists of graduation regions (220a, 220b) that are arranged in a circular-ring-shaped manner and have different reflection properties.

5. Rotatory position measuring device according to Claim 1, wherein more strongly reflecting graduation regions (220b) are embodied on the graduated disc (210) in such a way that the optical power on the beams incident thereon emerges therefrom.

6.  Rotatory position measuring device according to Claim 1, wherein the optical means are embodied as rotationally symmetric step structures on the carrier substrate of the graduated disc (210).

7.  Rotatory position measuring device according to Claim 1, wherein the light source (10; 100; 1000) completely illuminates the material measure (20; 200; 2000) without optical components disposed therebetween.

8.  Rotatory position measuring device according to Claim 1, wherein the detector arrangement (30; 300; 3000) comprises a circular-ring-shaped detector array (310) which consists of a plurality of detector elements arranged about the axis of rotation (R) in a circular-shaped manner.

**Revendications**

1.  Dispositif de mesure de position rotatif comportant

    - une source lumineuse (10 ; 100 ; 1000),
    - un disque gradué (210) comportant une mesure matérialisée réfléchissante asymétrique de rotation (20 ; 200 ; 2000), et
    - un système détecteur optoélectronique (30 ; 300 ; 3000), dans lequel
    - le disque gradué (210) peut être mis en rotation par rapport à la source lumineuse (10 ; 100 ; 1000), et au système détecteur autour d'un axe de rotation (R) de manière à ce que, en cas de rotation relative, des signaux de position dépendant de l'angle de rotation puissent être détectés par l'intermédiaire du système détecteur (30 ; 300 ; 3000) et dans lequel
    - la source lumineuse (10 ; 100 ; 1000) est disposée de manière espacée d'une première distance (u) de la mesure matérialisée (20 ; 200 ; 2000) sur l'axe de rotation (R), et
    - le système détecteur (30 ; 300 ; 3000) est disposé à une deuxième distance (v) de la mesure matérialisée (20 ; 200 ; 2000), ladite distance étant différente de la première distance (u) et dans lequel
    - le disque gradué comprend des moyens optiques qui possèdent un effet optique conduisant à la formation d'une image de la source lumineuse (10 ; 100 ; 1000) à une position qui présente une troisième distance (u') par rapport à la mesure matérialisée (20 ; 200 ; 2000), dans lequel la troisième distance (u') a une valeur différente de la première distance (u) et dans lequel les moyens optiques exercent sur le disque gradué (210) un effet optique qui correspond à l'effet optique d'un miroir concave ou d'un miroir convexe ayant une longueur focale (f) définie.

2.  Dispositif de mesure de position rotatif selon la revendication 1, dans lequel la troisième distance (u') est identique à la deuxième distance (v).

3.  Dispositif de mesure de position rotatif selon la revendication 1, dans lequel une formation d'image réelle de la source lumineuse (10 ; 100 ; 1000) à l'aide des moyens optiques sur le disque gradué (210) conduit à une position telle que les faisceaux émis à partir d ladite position passent en premier lieu par le dispositif détecteur (30 ; 300 ; 3000), sont incidents sur la mesure matérialisée (20 ; 200 ; 2000) et, après la réflexion qui en résulte à cet endroit, se propagent en convergeant dans la direction du dispositif détecteur (30 ; 300 ; 3000).

4.  Dispositif de mesure de position rotatif selon la revendication 1, dans lequel la mesure matérialisée (20 ; 200 ; 2000) est réalisée sous la forme d'une graduation radiale qui est constituée de zones de division (220a, 220b) disposées de manière circulaire et ayant des propriétés de réflexion différentes.

5.  Dispositif de mesure de position rotatif selon la revendication 1, dans lequel des zones de division plus fortement réfléchissantes (220b) sont formées sur le disque gradué (210) de manière à ce que celles-ci conduisent à l'effet optique sur les faisceaux incidents sur celles-ci.

6.  Dispositif de mesure de position rotatif selon la revendication 1, dans lequel les moyens optiques sont réalisés sous la forme de structures étagées asymétriques de rotation sur le substrat de support du disque gradué (210).

7.  Dispositif de mesure de position rotatif selon la revendication 1, dans lequel la source lumineuse (10 ; 100 ; 1000) éclaire entièrement la mesure matérialisée (20 ; 200 ; 2000) sans composants optiques disposés en position intermédiaire.

**8.** Dispositif de mesure de position rotatif selon la revendication 1, dans lequel le dispositif détecteur (30 ; 300 ; 3000) comprend un réseau de détecteurs circulaire (310) qui est constitué d'une pluralité d'éléments détecteurs disposés de manière circulaire autour de l'axe de rotation (R).

FIG. 1

FIG. 2

FIG. 3a

FIG. 3b

FIG. 4a

210

220b

220a

200

R

FIG. 4b

210

FIG. 5

**IN DER BESCHREIBUNG AUFGEFÜHRTE DOKUMENTE**

**In der Beschreibung aufgeführte Patentdokumente**

- JP 9133552 A

- JP 2002139353 A

**In der Beschreibung aufgeführte Nicht-Patentliteratur**

- Analysis of Grating Imaging and its Application to Displacement Metrology. 1st European Congress on Optics applied to Metrology. SPIE, 1977, vol. 36, 325-332